# EUROPÄISCHE PATENTSCHRIFT

(11) **EP 3 664 986 B1**
(45) Veröffentlichungstag und Bekanntmachung des Hinweises auf die Patenterteilung: **27.05.2026**
(21) Anmeldenummer: 18745588.6
(22) Anmeldetag: 24.07.2018
(51) Int. Cl.: B29C 45/17, B29C 45/16, B29C 45/06

(54) **MONTAGEVORRICHTUNG FÜR FORMWERKZEUGTEILE EINES SPRITZGIESSWERKZEUGS, SPRITZGIESSWERKZEUG UND SPRITZGIESSMASCHINE**
MOUNTING DEVICE FOR MOULD PARTS OF AN INJECTION-MOULDING TOOL, INJECTION-MOULDING TOOL AND INJECTION-MOULDING MACHINE
DISPOSITIF DE MONTAGE POUR PARTIES D'OUTIL DE MOULAGE D'UN OUTIL DE MOULAGE PAR INJECTION, OUTIL DE MOULAGE PAR INJECTION ET MACHINE DE MOULAGE PAR INJECTION

(30) Priorität: 11.08.2017 CH 10202017
(43) Veröffentlichungstag der Anmeldung: 17.06.2020
(73) Patentinhaber: Alpla Werke Alwin Lehner GmbH & Co. KG, 6971 Hard (AT)
(72) Erfinder: SCHUSTER, Markus, 6971 Hard (AT)
(74) Vertreter: Bohest AG Branch Ostschweiz
(86) Internationale Anmeldenummer: PCT/EP2018/070018
(87) Internationale Veröffentlichungsnummer: WO 2019/029984

(56) Entgegenhaltungen:
- EP-A1- 1 306 185
- EP-A2- 1 973 721
- DE-A1- 102011 103 609
- JP-A- 2001 038 768

## Beschreibung

Die Erfindung betrifft eine Montagevorrichtung für Formwerkzeugteile eines Spritzgiesswerkzeugs gemäss dem Oberbegriff des Patentanspruchs 1. Weiters betrifft die Erfindung auch ein Spritzgiesswerkzeug und eine Spritzgiessmaschine.

Ein sehr häufig zur weitgehend vollautomatischen Herstellung von Kunststoffteilen eingesetztes Verfahren ist das Spritzgiessen. Es wird sowohl für Massenartikel als auch für technische Kunststoffteile eingesetzt. Dabei können die Kunststoffteile unterschiedlichster Grössen hergestellt werden, beispielsweise Bestandteile von Uhrwerken oder auch Bestandteile von Autokarosserien. In den meisten Fällen ist keine Nacharbeit der gefertigten Kunststoffteile mehr erforderlich. Das Spritzgiessen umfasst das Plastifizieren eines üblicherweise pulverförmigen oder granulierten Kunststoffmaterials und seine Überführung unter hohem Druck in eine Formkavität eines Spritzgiesswerkzeugs. Das in die Werkzeugkavität eingespritzte plastifizierte Kunststoffmaterial erstarrt dort durch Abkühlen und/oder Vernetzen, so dass es schließlich entformt werden kann. Die zum Herstellen eines gespritzten Kunststoffteils erforderlichen Schritte laufen in der Regel vollautomatisch ab, sie bilden einen Zyklus mit entsprechenden Zykluszeiten, während dessen sich der periodisch ablaufende Fertigungsvorgang vollzieht.

Eine Standardspritzgiessmaschine besteht in der Regel aus zwei Hauptelementen. Zum einen aus einem Spritzaggregat mit einer Spritzeinheit, durch welche das Kunststoffgranulat aufbereitet und unter Druck in ein Spritzgiesswerkzeug einspritzt wird, und zum anderen aus einer Schliesseinheit, mittels der das Spritzgiesswerkzeug geöffnet und geschlossen wird. Die Schliesseinheit besteht in der Regel aus drei Platten, die auf einem Maschinenrahmen senkrecht in einer Achse angeordnet sind. Eine feste Formaufspannplatte trägt dabei ein erstes Formwerkzeugteil des Spritzgiesswerkzeugs (Düsenseite) und weist eine Durchführung auf, durch welche eine Düse der Spritzeinheit hindurchfahren und an das Spritzgiesswerkzeug andocken kann. Die zweite Platte ist eine bewegliche Formaufspannplatte, die auch Schliessplatte genannt wird. An ihr ist ein zweites Formwerkzeugteil des Spritzgiesswerkzeugs (Auswerferseite) montiert. Die bewegliche Schliessplatte kann mechanisch und/oder hydraulisch in Richtung zur festen Formaufspannplatte hin und von dieser weg verlagert werden, um das Spritzgiesswerkzeug zu öffnen oder zu schliessen. Die dritte Platte schließlich ist eine Stirnplatte. Sie hat eine abstützende Funktion. Zwischen der feststehenden Stirn- und der beweglichen Schliessplatte befindet sich in der Regel ein Kniehebel und/oder ein Hydraulikzylinder, um die Verlagerung der Schliessplatte entlang der Achse auszuführen.

Für viele Anwendungen des Spritzgiessverfahrens erweist es sich von Vorteil, wenn eine Hälfte des Spritzgiesswerkzeugs relativ zu einer zweiten Hälfte drehbar ist, beispielsweise um eine zu verarbeitende Kunststoffschmelze aus zwei entlang der Achse einander gegenüberliegenden Spritzaggregaten in das Spritzgiesswerkzeug einspritzen zu können. Die drehbare Spritzgiesswerkzeughälfte weist dabei an ihren beiden einander axial gegenüberliegenden Seiten erste Formkavitäten auf, die mit korrespondierenden zweiten Formkavitäten an einer Spritzgiesswerkzeughälfte, die an der festen Formaufspannplatte befestigt ist, oder mit einer weiteren Spritzgiesswerkzeughälfte, die an der beweglichen Schliessplatte bzw. Formaufspannplatte befestigt ist, zusammenwirken. Damit können Kunststoffteile aus verschiedenfarbigen Kunststoffschmelzen oder aus voneinander verschiedenen Kunststoffen, sogenannte 2-Komponenten Kunststoffteile, hergestellt werden. Im Fall eines einzigen Spritzaggregats bringt eine drehbare Hälfte des Spritzgiesswerkzeugs den Vorteil einer schnelleren Zykluszeit. Nach einem ersten Einspritzzyklus kann die drehbar gelagerte Formwerkzeughälfte gedreht werden, und die zuvor eingespritzten Kunststoffteile können abkühlen und ausgestossen werden, während bereits ein zweiter Einspritzzyklus stattfindet.

Aus dem Stand der Technik sind auch bereits Spritzgiessmaschinen bekannt, die einen prismatisch ausgebildeten, drehbaren Werkzeugträger aufweisen, der zwischen zwei Formaufspannplatten, nämlich einer feststehenden Formaufspannplatte und einer relativ dazu axial verschiebbaren Schliessplatte, angeordnet ist. Der prismatische Werkzeugträger weist wenigstens vier Seitenflächen auf und ist um eine Drehachse drehbar, die senkrecht auf eine Ebene steht, die durch Linearführungen aufgespannt ist, entlang derer die Schliessplatte verlagerbar ist. An dem prismatischen Werkzeugträger sind erste Formwerkzeugteile angeordnet, die mit zweiten Formwerkzeugteilen zusammenwirken, welche auf der feststehenden Formaufspannplatte bzw. auf der translatorisch verschiebbaren Formaufspannplatte bzw. Schliessplatte montiert sind. Der prismatische Werkzeugträger kann verschiedene Funktionseinheiten beinhalten. So können an den beiden den Formaufspannplatten für die zweiten Formwerkzeugteile gegenüberliegenden Seiten des Werkzeugträgers jeweils erste Formwerkzeugteile montiert sein, die im geschlossenen Zustand zur Aufnahme der eingespritzten Kunststoffmasse dienen. Nach einer Drehung um 90° gegenüber den Formaufspannplatten kann eine Auswerffunktion des drehbaren Werkzeugträgers aktiviert werden, während gleichzeitig an den beiden den Formaufspannplatten gegenüberliegenden Seiten des Werkzeugträgers ein Einspritzen von Kunststoffschmelze in die geschlossenen Formwerkzeugteile erfolgt.

Eine Spritzgiessmaschine mit einem prismatischen Werkzeugträger der in einer C-förmigen Konfiguration angeordnet ist, ist aus der WO2007/055607 A2 bekannt. Diese Konfiguration eignet sich nicht für hohe Lasten. Die EP 1 306 185 A1 offenbart eine Dreheinrichtung für eine Horizontal-Spritzgiessmaschine, wobei Aufspannplatten für Formwerkzeugteile auf einem Rahmen angeordnet sind. Diese Konfiguration ist unflexibel und erfordert lange Umrüstzeiten.

Spritzgiesswerkzeuge müssen hohen Schliessdrücken und erheblichen Innendrücken beim Spritzgiessen standhalten. Auch sind lange Standzeiten gefordert, während denen die Spritzgiesswerkzeuge über ihre Lebensdauer unzählige Male geöffnet und wieder geschlossen werden. Aus diesem Grund werden Spritzgiesswerkzeuge sehr massiv ausgebildet. Jedes der Formwerkzeugteile kann dabei einige Tonnen wiegen. Die Handhabung der Formwerkzeugteile und deren Montage sind mit einem erheblichen Aufwand verbunden. Zudem müssen die ersten und zweiten Formwerkzeugteile exakt aufeinander ausgerichtet sein, um die geforderte Genauigkeit an die Fertigungstoleranzen und die Gleichmässigkeit der spritzgegossenen Kunststoffteile zu gewährleisten. Zum Einsetzen, Auswechseln oder Umrüsten des Spritzgiesswerkzeugs muss bei den bekannten Spritzgiessmaschinen des Stands der Technik und insbesondere bei solchen mit drehbaren Werkzeugträgern daher ein erheblicher Justieraufwand getrieben werden, der zeit- und kostenintensiv ist.

Aufgabe der vorliegenden Erfindung ist es daher, den Nachteil von langen Rüst- und Umrüstzeiten und -kosten beim Einsetzen, Entfernen oder Auswechseln von Spritzgiesswerkzeugen zu beseitigen sowie den Aufwand für die Justierung der Formwerkzeugteile zueinander zu reduzieren. Die Handhabung der Formwerkzeugteile und deren Montage in einer Spritzgiessmaschine sollen vereinfacht sein.

Die Lösung der vorstehend geschilderten und noch weiterer Aufgaben besteht in einer Montagevorrichtung für Formwerkzeugteile eines Spritzgiesswerkzeugs, welche die im Patentanspruchs 1 angeführten Merkmale aufweist. Weiterbildungen und/oder vorteilhafte und bevorzugte Ausführungsvarianten der Erfindung sind Gegenstand der abhängigen Patentansprüche.

Durch die Erfindung wird eine Montagevorrichtung für Formwerkzeugteile eines Spritzgiesswerkzeugs vorgeschlagen, die eine in eine Spritzgiessmaschine einsetzbare Montageplatte aufweist, auf welcher ein Werkzeugträger zur Aufnahme von ersten Formwerkzeugteilen montierbar ist. Die Montageplatte ist auf einem Montagerahmen angeordnet, der ein Führungssystem für eine translatorische Verlagerung der Montageplatte entlang einer Längserstreckung des Montagerahmens aufweist. Weiters weist der Montagerahmen eine Abstützeinrichtung für ein stationär anordnenbares mit wenigstens einem der ersten Formwerkzeugteilen korrespondierendes zweites Formwerkzeugteil auf.

Indem der Montagerahmen bereits mit einem Führungssystem für eine translatorische Verlagerung der Montageplatte für den Werkzeugträger ausgestattet ist und eine Abstützeinrichtung für ein zweites Formwerkzeugteil aufweist, können auf dem Werkzeugträger und der Abstützeinrichtung angeordnete erste Formwerkzeugteile bereits vorjustiert werden, bevor die Montagevorrichtung in die Spritzgiessmaschine eingesetzt wird. Das Führungssystem ist ein Bestandteil der Montagevorrichtung. Daher muss bei der Justierung der ersten und zweiten Formwerkzeugteile zueinander nicht auf Führungsorgane und Verlagerungseinrichtungen der Spritzgiessmaschine Rücksicht genommen werden. Das Maschinenbett bzw. die Führungsorgane der Spritzgiessmaschine dienen nur noch zur Auflage und Abstützung der Unterseite des Montagerahmens der Montagevorrichtung. Die am Werkzeugträger und an der Abstützeinrichtung montierten ersten und zweiten Formwerkzeugteile können somit völlig unabhängig von der Spritzgiessmaschine justiert werden. Die zueinander justierten Formwerkzeugteile sind auf dem Werkzeugträger montiert. Die Montagvorrichtung ist ohne Demontage und/oder Montage von Konstruktionsteilen (weder an der handelsüblichen Spritzgiessmaschine noch an der Montagevorrichtung) in die Spritzgiessmaschine einsetzbar oder aus der Spritzgiessmaschine entnehmbar. Hierbei kann auf handelsübliche universal einsetzbare Spritzgiessmaschinen zurückgegriffen werden, die auch mit anderen Spritzgiesswerkzeugen arbeiten. Entsprechend entfallen Umbauten oder Spezialisierungen an den Spritzgiessmaschinen. Nach dem Einsetzen der Montageeinrichtung kann der Aufwand für eine Endjustierung der Formwerkzeugteile auf ein Minimum beschränkt werden. In der Regel beschränkt sich der Aufwand auf die einmalige Adaptierung des Spritzgießwerkzeugs an die Spritzgiessmaschine, um die von Spritzgiessmaschine zu Spritzgiessmaschine verschiedenen Toleranzen auszugleichen. Dadurch können Rüst- und Umrüstzeiten der Spritzgiessmaschine und die damit verbundenen Kosten und Produktionsausfallzeiten der Spritzgiessmaschine verringert werden. In der Regel benötigt der Montagerahmen mit den Formwerkzeugteilen keinen höheren Einrichtungsaufwand in der Spritzgiessmaschine als jedes beliebig andere Spritzgiesswerkzeug. Der Montagerahmen ist in der Regel einteilig ausgebildet, kann jedoch auch mehrteilig ausgebildet sein.

Eine Ausführungsvariante der Montagevorrichtung kann vorsehen, dass der Montagerahmen an einer Unterseite, die von der Montageplatte abgewandt ist, mit Abstützelementen ausgestattet ist, die zur Abstützung gegenüber dem Maschinenbett der Spritzgiessmaschine dienen. Die Abstützelemente können dabei an den beiden Längsseiten der Unterseite des Montagerahmens angeordnet sein und dienen dazu, Unebenheiten des Maschinenbetts der Spritzgiessmaschine bzw. von dort angeordneten Führungsorganen, wie z.B. Führungsschienen oder ähnlichem, auszugleichen. Grössere Ungleichmässigkeiten können dabei einfach durch entsprechendes Einsetzen von unterschiedlich dicken Abstützelemente kompensiert werden. Die Abstützelemente können beispielsweise Justierbleche aus einem Qualitätsstahl sein. Auch können diese gehärtet sein.

Für eine exakte Ausrichtung des Montagerahmens in Bezug auf eine Maschinenachse der Spritzgiessmaschine kann in einer weiteren Ausführungsvariante der Montagevorrichtung vorgesehen sein, dass der Montagerahmen an seinem einen Längsende eine Stirnseite aufweist, welche für eine lösbare Verbindung mit einer festen Formaufspannplatte einer Spritzgiessmaschine ausgebildet ist. Beispielsweise kann dazu an der Stirnseite des Montagerahmens eine Verbindungsplatte montiert ist, die eine Oberseite des Montagerahmens überragt und mit der Formaufspannplatte lösbar verbindbar, insbesondere verschraubbar ist.

In einer weiteren Ausführungsvariante der Montagevorrichtung weist das Führungssystem des Montagerahmens zwei parallel zu seiner Längserstreckung verlaufende Führungsschienen, die an einer Oberseite des Montagerahmens angeordnet sind, sowie eine Verstellvorrichtung für die Montageplatte. Der Montagerahmen weist seine eigenen Führungsschienen für eine Verlagerung der Montageplatte entlang der Längserstreckung des Montagerahmens auf. Die in der Spritzgiessmaschine vorgesehenen Führungsorgane, wie z.B. Führungsschienen, weisen hingegen keine Führungsfunktion für die Montagevorrichtung auf. Sie dienen allein zur Auflage und Abstützung des die Montageplatte tragenden Montagerahmens. Zum Verlagern der Montageplatte entlang der Längserstreckung des Montagerahmens werden nicht an der Spritzgiessmaschine angeordnete Verstelleinrichtungen herangezogen, sondern die Montagevorrichtung besitzt eine eigene Verstellvorrichtung, die im Wesentlichen unabhängig von den Verstelleinrichtungen der Spritzgiessmaschine betreibbar ist.

In einer Ausführungsvariante der erfindungsgemässen Montagevorrichtung kann die Montageplatte selbst auf einer Verschiebeplatte gelagert sein. Die Verschiebeplatte stützt sich dabei an den Führungsschienen an der Oberseite des Montagerahmens ab. Die Montageplatte ist gemeinsam mit der Verschiebeplatte in Längsrichtung des Montagerahmens verlagerbar. Bei einer in eine Spritzgiessmaschine eingesetzten Montagevorrichtung verläuft die Längsrichtung des Montagerahmens im Wesentlichen parallel zur Maschinenachse der Spritzgiessmaschine. Indem die Montageplatte auf der Verschiebeplatte gelagert ist, sind die Befestigungsfunktion für den Werkzeugträger und die Verstellfunktion voneinander entkoppelt. Die Verschiebeplatte ist allein für die translatorische Verlagerung verantwortlich. Die Montageplatte hingegen dient zur Befestigung des Werkzeugträgers und kann für weitere Bewegungsfreiheitsgrade desselben, insbesondere Drehbewegungen, ausgebildet sein.

In einer weiteren Ausführungsvariante der Montagevorrichtung kann vorgesehen sein, dass die Montageplatte auf einer Dreheinheit montiert ist, welche die Verschiebeplatte durchsetzt. Die Montageplatte und der gegebenenfalls darauf montierte Werkzeugträger sind dann um eine senkrecht zu einer Oberseite der Verschiebeplatte verlaufenden Drehachse rotierbar. Die Oberseite der Verschiebeplatte verläuft dabei im Wesentlichen parallel zu einer Ebene, die durch das Führungssystem, insbesondere Führungsschienen, aufgespannt ist, entlang dessen die translatorische Verlagerung der Verschiebeplatte erfolgt. Bei einer in eine Spritzgiessmaschine eingesetzten Montagevorrichtung erfolgt die translatorische Verlagerung der Verschiebeplatte parallel zur Richtung der Maschinenachse der Spritzgiessmaschine. In der Regel verläuft die Maschinenachse in horizontaler Richtung. Die Drehachse der Montageplatte erstreckt sich dann senkrecht dazu in vertikaler Richtung.

In einer Ausführungsvariante der Montagevorrichtung mit einer auf einem Montagerahmen angeordneten Verschiebeplatte und einer der gegenüber drehbar gelagerten Montageplatte weist die Dreheinheit einen hochpoligen Elektromotor mit einem Stator und einem Rotor auf. Vorzugsweise ist der hochpolige Elektromotor als ein sogenannter Torquemotor ausgebildet. Der Rotor ist dabei drehfest mit der Montageplatte verbunden. Der Torquemotor kann in Innenläufer-Bauweise ausgebildet sein. Dabei dreht sich der Rotor innerhalb des Stators. Hierbei können der Rotor und der Stator jeweils als Hohlzylinder ausgebildet sein. Das Drehmoment M eines Torquemotors ist bei gegebener Kraftwirkung F über die mathematische Beziehung M = F × r vom Radius abhängig. Obzwar ein Torquemotor in Aussenläufer-Bauweise ein grösseres Drehmoment erzeugen kann als ein Elektromotor gleicher Baugrösse mit innenliegendem Rotor, ist die Größe des Motors ausreichend, um auch Werkzeugträger mit Formwerkzeugteilen mit einem Gesamtgewicht bis etwa 10 Tonnen in ausreichender Geschwindigkeit drehen zu können. Es sei darauf hingewiesen, dass auch bei diesem hohen Gewicht eine Abstützung des Werkzeugträgers, respektive der an ihm angeordneten Formwerkzeugteile, beispielsweise in Form einer Lagerung oder durch Holme an seiner der Befestigung an der Montageplatte gegenüberliegenden Seite, unnötig ist und damit fehlt. Ein Torquemotor ist ein bürstenloser permanenterregter Gleichstrommotor und ist daher verschleissfrei. Das maximal erzielbare Drehmoment eines Torquemotors kann zusätzlich durch eine Veränderung seiner axialen Bauhöhe beeinflusst werden. Dies bedeutet, dass eine Drehmomentsteigerung des Motors alleine durch Tausch und ohne weitere Änderungen an der Montagevorrichtung vorgenommen werden kann.

Prinzipiell könnte die Drehung der Montageplatte auch beispielsweise über einen Zahnkranz erfolgen, der mit der Montageplatte verbunden ist und über ein in den Zahnkranz eingreifendes Ritzel drehbar ist, welches beispielsweise durch einen hydraulischen Antrieb betrieben ist. Ein derartiger mechanischer Antrieb weist jedoch keine so grosse Positioniergenauigkeit auf wie ein Torquemotor, insbesondere aufgrund des Spiels der miteinander in Eingriff stehenden Zähne. Daher benötigt ein mechanischer Antrieb Indexierstifte, die die Montageplatte bei Erreichen der gewünschten Position fixieren.

Eine weitere Variante der Montagevorrichtung kann vorsehen, dass zur Überwachung der Drehbewegung des Elektromotors ein erster absoluter Messwertgeber, vorzugsweise ein Drehwinkelsensor, vorgesehen ist. Mit Hilfe des Drehwinkelsensors kann die Drehbewegung der Montageplatte sehr genau überwacht und gesteuert werden. Auf mechanische Verriegelungselemente, beispielsweise Indexierstifte oder dergleichen, zwischen der Verschiebeplatte und der Montageplatte kann verzichtet werden. Auch entfällt eine Abfrage der jeweiligen Position derartiger Indexierstifte, nämlich eingefahren und verriegelt bzw. zurückgezogen und freigegeben. Dadurch vereinfacht sich die Steuerung der Drehbewegung der Montageplatte und eines darauf montierten Werkzeugträgers. Ferner verkürzt sich auch die Zykluszeit bei der Herstellung der Spritzgiessteile.

Bei einer weiteren Ausführungsvariante der Montagevorrichtung kann die Abstützeinrichtung für das stationäre zweite Formwerkzeugteil als ein Trägerschlitten ausgebildet sein, der sich auf den Führungsschienen an der Oberseite des Montagerahmens abstützt und translatorisch zwischen der Montageplatte und einer am Montagerahmen angeordneten Verbindungsvorrichtung zu einer feststehenden Formaufspannplatte einer Spritzgiessmaschine verlagerbar ist. In der Regel wird auf dem Trägerschlitten eine Düsenplatte montiert, welche das zweite Formwerkzeugteil darstellt. Der translatorisch verlagerbare Trägerschlitten erleichtert die Justierung des zweiten Formwerkzeugteils in Bezug auf das an einem auf der Montageplatte montierten Werkzeugträger montierte erste Formwerkzeugteil. Ein am Werkzeugträger montiertes erstes Formwerkzeugteil kann auf diese Weise bereits exakt auf das zweite Formwerkzeugteil, respektive Düsenplatte, ausgerichtet werden, bevor die Montagevorrichtung mit dem darauf angeordneten Werkzeugträger und dem ersten Formwerkzeugteil sowie mit dem Trägerschlitten und dem darauf angeordneten zweiten Formwerkzeugteil überhaupt in die Spritzgiessmaschine eingesetzt wird. Nach dem Einsetzen der Montagevorrichtung in die Spritzgiessmaschine und der Befestigung der Abstützplatte an der feststehenden Formaufspannplatte der Spritzgiessmaschine wird der Montageschlitten in Richtung der feststehenden Formaufspannplatte verlagert, bis die Düsenplatte bzw. das zweite Formwerkzeugteil an der festen Formaufspannplatte anliegt und mit dieser fest verschraubt werden kann. Durch die Befestigung des Montagerahmens an der festen Formaufspannplatte ist dieser bereits exakt auf die Maschinenachse der Spritzgiessmaschine ausgerichtet. Da die ersten und zweiten Formwerkzeugteile bereits vor dem Einsetzen der Montagevorrichtung in die Spritzgiessmaschine zueinander justiert worden sind, kann eine weitere Justierung entfallen. Es ist nur noch erforderlich, die translatorisch verlagerbare Formaufspannplatte, respektive Schliessplatte, mit ihrem gegebenenfalls daran montierten weiteren zweiten Formwerkzeugteil auf die am translatorisch verlagerbaren und gegebenenfalls drehbar gelagerten Werkzeugträger mit einem daran montierten ersten Formwerkzeugteil zuzustellen und zu justieren. Die Justierung des weiteren zweiten Formwerkzeugteils erfolgt dabei an der translatorisch verlagerbaren Formaufspannplatte. Insofern unterscheidet sich diese Justage nicht von der Justage von Spritzgießwerkzeugen mit einem an der feststehenden Formaufspannplatte und einem an der Schließplatte anzuordnenden Formwerkzeugteil.

Die translatorische Verlagerung der Verschiebeplatte entlang den Führungsschienen an der Oberseite des Montagerahmens kann beispielsweise hydraulisch erfolgen. Eine weitere Ausführungsvariante der erfindungsgemässen Montagevorrichtung kann vorsehen, dass die Verstellvorrichtung für die translatorisch verstellbare Verschiebeplatte einen Linearmotor umfasst. Läufer und Ständer des Linearmotors sind nicht in Berührung miteinander. Dadurch ist der Linearmotor praktisch verschleissfrei.

Eine Ausführungsvariante der Montagevorrichtung kann einen zweiten absoluten Messwertgeber, beispielsweise auf Basis eines Hallsensors, vorsehen, der die translatorische Verlagerung der Verschiebeplatte überwacht. Indem die translatorische Verlagerung der Verschiebeplatte überwacht wird und absolut messbar ist, können die translatorische Verlagerung der Verschiebeplatte und die Rotation der darauf gelagerten Montageplatte gleichzeitig durchgeführt werden. Entscheidend ist dabei, dass der Abstand des ersten Formwerkzeugteils von den an der feststehenden und ggf. auch an der translatorisch verlagerbaren Formaufspannplatte angeordneten zweiten Formwerkzeugteilen gross genug ist, dass es bei der Rotation zu keiner unerwünschten Berührung zwischen den ersten und zweiten Formwerkzeugteilen kommen kann. Eine für die Erfassung der absoluten translatorischen Verschiebewerte der Verschiebeplatte erforderliche Nullpunktfestlegung kann beispielsweise dadurch erfolgen, dass nach dem Einsetzen und Befestigen der Montagevorrichtung an der feststehenden Formaufspannplatte die Verschiebeplatte in Richtung der feststehenden Formaufspannplatte verstellt wird, bis die ersten und zweiten Formwerkzeugteile geschlossen sind. Die dabei registrierte Position der Verschiebeplatte wird als Nullposition festgelegt, von der aus die absoluten Verschiebewerte gemessen werden können. Zusätzlich kann an der Verschiebeplatte auch noch ein Sensor zur Erfassung der exakten Position der translatorisch verlagerbaren Formaufspannplatte angeordnet sein. Die von diesem Sensor erfassten absoluten Messwerte können gleichfalls auf die definierte Nullposition der Verschiebeplatte bezogen sein. Mit einer derartig ausgerüsteten Montagevorrichtung sind synchronisierte translatorische Verschiebungen und Drehungen der Montageplatte mit einem darauf montierten bestückten Werkzeugträger ermöglicht. Die Drehungen eines bestückten Werkzeugträgers um 90° können beispielsweise in ca. 0,7 s bis 0,8 s durchgeführt werden. Drehungen um 180° können beispielsweise in ca. 1,2 s bewerkstelligt werden; dies bei einem Gewicht des mit ersten Formwerkzeugteilen bestückten Werkzeugträgers von bis zu etwa 10 Tonnen.

Bei einem Montagewerkzeug, das zur Drehung mit einem Torquemotor in Innenläufer-Bauweise ausgestattet ist, kann der Rotor hohlzylinderförmig ausgebildet sein und eine vorzugsweise zentral angeordnete Durchführung für Versorgungsleitungen für Medien und elektrische Energie sowie für Steuerleitungen aufweisen. Infolge dieser Anordnung der Versorgungs- und Steuerleitungen ergibt sich eine sehr platzsparende Konstruktion, die überdies besonders einfach handhabbar ist. Die Versorgungs- und Steuerleitungen können von der Unterseite des Montagewerkzeugs oder auch von der Oberseite zugeführt werden. Die Längs- und Breitseiten des Werkzeugs können dadurch frei zugänglich sein. Die Durchführung ist dabei für die Aufnahme von wenigstens einem Paar erste Versorgungsleitungen für die Zufuhr und die Abfuhr von Kühlwasser, wenigstens einem Paar zweite Versorgungsleitungen für die Zufuhr und die Abfuhr von Hydrauliköl, wenigstens einer Versorgungsleitung für die Zufuhr von Druckluft, wenigstens einer Versorgungsleitung für elektrische Energie und wenigstens einer Steuerleitung ausgebildet.

Gemäß einem Ausführungsbeispiel ist die Durchführung als eine Drehdurchführung ausgebildet. Die Drehdurchführung ermöglicht eine unbegrenzte Anzahl von Drehungen und keine Begrenzung der Drehrichtung, da sowohl das Einführteil als auch das Ausführteil, an denen die Versorgungsleitungen und die wenigstens eine Steuerleitung fest verbunden sind, feststehend sind.

Gemäß einem weiteren Ausführungsbeispiel ist ein Spritzgiesswerkzeug mit einem ersten Formwerkzeugteil und wenigstens einem zweiten Formwerkzeugteil vorgeschlagen, die im geschlossenen Zustand wenigstens eine Formkavität begrenzen, wobei das zweite Formwerkzeugteil an einer feststehenden Formaufspannplatte einer Spritzgiessmaschine montierbar ist. Hierbei ist das erste Formwerkzeugteil an einem Werkzeugträger befestigt, der auf einer Montageplatte einer Montagevorrichtung gemäss einem der vorstehend geschilderten Ausführungsbeispiele montiert ist. Das zweite Formwerkzeugteil kann auf einer Abstützeinrichtung an der geschilderten Montagevorrichtung befestigt sein. Ein derartig ausgebildetes Spritzgiesswerkzeug kann bereits vor dem Einsetzen in eine Spritzgiessmaschine justiert werden. Der Justieraufwand nach dem Einsetzen ist deutlich reduziert und erfordert entsprechend einen deutlich kleineren Zeit- und Investitionsaufwand. Das Spritzgiesswerkzeug kann in handelsübliche Spritzgiessmaschinen mit Führungsholmen ebenso eingesetzt werden wie in handelsübliche holmenlose Spritzgiessmaschinen. Es kann in Einkomponenten-Spritzgiessmaschinen oder auch in Zwei- oder Mehrkomponenten-Spritzgiessmaschinen verwendet werden.

In einer Ausführungsvariante kann das Spritzgiesswerkzeug einen prismatisch ausgebildeten Werkzeugträger umfassen, der um eine senkrecht zu einer Verschiebeebene verlaufende Drehachse vorbestimmt drehbar ist. Derartige Spritzgiesswerkzeuge sind auch unter der Bezeichnung Würfelwerkzeuge bekannt. Die Besonderheit des vorgeschlagenen Würfelwerkzeugs ist, dass es seine eigene translatorische und rotatorische Verstelleinrichtung aufweist und nur begrenzt auf eine Verstelleinrichtung der Spritzgiessmaschine angewiesen ist, beispielsweise zur Zustellung der translatorisch verlagerbaren Formaufspannplatte. In einer Ausführungsvariante eines derartigen Spritzgiesswerkzeugs weist der Werkzeugträger wenigstens 4 Seitenflächen auf, die parallel zu seiner Drehachse verlaufen und senkrecht zueinander ausgerichtet sind. Wenigstens an zwei einander gegenüberliegenden Seitenflächen des Werkzeugträgers können erste Formwerkzeugteile montiert sein. In einer weiteren Ausführungsvariante können alle vier Seitenflächen mit Formwerkzeugteilen und zusätzlichen Komponenten, wie z.B. Auswerfern, Zudecklern, die in geöffnetem Zustand gespritzte Verschlüsse schließen, etc. bestückt sein. Bei dem vorgeschlagenen Spritzgiesswerkzeug steht auch die von der Montageplatte abgewandte Oberseite des Werkzeugträgers aufgrund nicht notwendiger und damit fehlender Abstützelemente wie bspw. Lagerungen frei zur Verfügung. Dort können beispielsweise Komponenten untergebracht werden, die für die translatorische Verschiebung und für die Drehbewegung des auf der Montagevorrichtung montierten Werkzeugträgers erforderlich sind.

Ein Spritzgiesswerkzeug, das auf einer Montagevorrichtung gemäss den vorstehend geschilderten Ausführungsbeispielen montiert ist, ist im Wesentlichen gleichzeitig translatorisch und rotatorisch verlagerbar. Dadurch kann die Zykluszeit verringert werden.

Bei einer Ausführungsvariante des Spritzgiesswerkzeugs ist innerhalb und/oder an einer der Montageplatte gegenüberliegenden Oberseite des prismatisch ausgebildeten Werkzeugträgers wenigstens ein Ventilblock für die Zuleitung, Ableitung und Verteilung eines hydraulischen Mediums, einer Kühlflüssigkeit und von Druckluft angeordnet. Dadurch ist das Spritzgiesswerkzeug weitgehend autonom von den an der Spritzgiessmaschine vorgesehenen Verteilern für Hydraulik, Kühlmittel und Pneumatik betreibbar. Diese Art der Ausbildung erweist sich insbesondere bei Würfelwerkzeugen von Vorteil, die auf einer translatorisch verschiebbaren und drehbaren Montageplatte gelagert sind, welches für die Drehbewegung mit einem Torquemotor in Innenläufer-Bauweise ausgebildet ist. Im zentralen freien Bereich des hohlzylinderförmig ausgebildeten Rotors kann dann eine Drehdurchführung für Versorgungsleitungen für gasförmige und flüssige Medien und elektrische Energie sowie für Steuerleitungen angeordnet sein. Dabei sind wenigstens ein Paar erste Versorgungsleitungen für die Zufuhr und die Abfuhr von Kühlwasser, wenigstens ein Paar zweite Versorgungsleitungen für die Zufuhr und die Abfuhr von Hydrauliköl, wenigstens eine Versorgungsleitung für Druckluft, wenigstens eine Versorgungsleitung für elektrische Energie und wenigstens eine Steuerleitung vorgesehen.

Gemäß einem weiteren Ausführungsbeispiel ist eine Spritzgiessmaschine mit einer Montagevorrichtung für ein Spritzgiesswerkzeug gemäss einer der vorstehend geschilderten Ausführungsvarianten vorgeschlagen, wobei die Spritzgiessmaschine eine translatorisch verlagerbare Formaufspannplatte aufweist. Die translatorische Verlagerung der Montageplatte ist im Wesentlichen parallel zu der translatorischen Verlagerung der Formaufspannplatte.

Damit ist die Richtung der Verlagerung der translatorisch verlagerbaren Formaufspannplatte und die Richtung der translatorischen Verlagerung der Montageplatte im Wesentlichen parallel. Da die Längserstreckung des Spritzgiesswerkzeugs und die Längserstreckung der Spritzgiessmaschine im Wesentlichen zueinander parallel sind, kann das Spritzgiesswerkzeug von oben oder von der Seite ohne zumindest teilweise Demontage des Spritzgiesswerkzeugs in die Spritzgiessmaschine eingesetzt werden. Das Einsetzen, Entfernen oder Auswechseln von Spritzgiesswerkzeugen ist dadurch erleichtert und erfordert einen kleineren Zeit- und Kapitaleinsatz als herkömmlich ausgestattete Spritzgiessmaschinen. Dies gilt insbesondere auch für Spritzgiessmaschinen, die mit einem Spritzgiesswerkzeug gemäss einem der vorstehend geschilderten Ausführungsbeispiele ausgerüstet sind. Die auf der vorgeschlagenen Montagevorrichtung angeordneten Bestandteile des Spritzgiesswerkzeugs weisen eine sehr grosse Eigensteifigkeit auf. Auf eine obenliegende Abstützung, wie z.B. zusätzliche Holme, zur Vorbeugung gegen ein Verkippen kann unabhängig vom Werkzeuggewicht verzichtet sein.

Gemäß einem weiteren Ausführungsbeispiel ist wenigstens eine Plastifiziereinheit zum Plastifizieren eines üblicherweise pulverförmigen oder granulierten Kunststoffmaterials und seine Überführung unter hohem Druck in eine durch das an der translatorisch verlagerbaren Formaufspannplatte montierte erste Formwerkzeugteil und das an dem Werkzeugträger angeordnete zweite Formwerkzeugteil gebildete Formkavität mit der translatorisch verlagerbaren Formaufspannplatte fest verbunden. Damit kann das erste Formwerkzeugteil fest mit der Plastifiziereinheit verbunden sein. Hierbei können auch mehrere Plastifiziereinheiten mit der translatorisch verlagerbaren Formaufspannplatte verbunden sein. Hierdurch können Spritzgießteile zwei- oder mehrkomponentig ausgebildet werden. Die Plastifiziereinheit kann in jedem beliebigen Winkel zu der Spritzgiessmaschinenlängsachse angeordnet sein. In der Regel wird eine Längsachse der Plastifiziereinheit in oder parallel zu einer Ebene liegen, die senkrecht auf eine durch das Führungssystem der Spritzgiessmaschine aufgespannten Ebene ist.

Gemäß einem weiteren Ausführungsbeispiel ist die translatorisch verlagerbare Formaufspannplatte von einer Geschlossen-Stellung in eine Offen-Stellung, und umgekehrt, um eine vorbestimmte erste Distanz verlagerbar. Die Montageplatte von einer Geschlossen-Stellung in eine Offen-Stellung, und umgekehrt, ist um eine zweite Distanz verlagerbar. Hierbei ist die erste Distanz im Wesentlichen doppelt so groß ist wie die zweite Distanz. Da die erste und die zweite Distanz im Wesentlichen innerhalb des gleichen Zeitfensters zurückgelegt werden, ergibt sich, dass die Verfahrgeschwindigkeit der Montageplatte etwa die Hälfte so groß ist wie der Verfahrgeschwindigkeit der translatorisch verlagerbaren Formaufspannplatte.

Gemäß einem weiteren Ausführungsbeispiel beginnen die translatorische Verlagerung und eine rotatorische Bewegung der Montageplatte im Wesentlichen gleichzeitig. Hierdurch kann Zykluszeit gespart werden, da die translatorische und rotatorische Bewegung im Wesentlichen innerhalb des gleichen Zeitfensters ausgeführt werden können.

Gemäß einen weiteren Ausführungsbeispiel ist eine Spritzgiessmaschine mit einer entlang von Führungsschienen translatorisch verlagerbaren und einer feststehenden Formaufspannplatte mit einem Spritzgiesswerkzeug gemäss einem der vorhergehenden Ausführungsbeispiele vorgeschlagen. Das Spritzgiesswerkzeug liegt auf den Führungsschienen auf und ist an die feststehende Formaufspannplatte lösbar verbunden. Nachdem das Spritzgiesswerkzeug einmal an die handelsübliche Spritzgiessmaschine angepasst worden ist, entfallen nach einem Spritzgiesswerkzeugwechsel nochmalige Justagen. Gerade durch die Nutzung des maschinenseitigen Führungssystems als Auflage für das vorgeschlagene Spritzgiesswerkzeug ist eine hohe Wiederholgenauigkeit beim Einsetzen des vorgeschlagenen Spritzgiesswerkzeugs in die Spritzgiessmaschine gegeben. Gerade das Aufliegen auf dem Führungssystem der Spritzgiessmaschine und das Befestigen des vorgeschlagenen Spritzgiesswerkzeugs an der feststehenden Formaufspannplatte kann Verspannungen des Spritzgiesswerkzeugs verhindern.

Weitere Vorteile und Ausführungsvarianten der Erfindung ergeben sich aus der nachstehenden Beschreibung eines Ausführungsbeispiels unter Bezugnahme auf die schematischen Zeichnungen in nicht massstabsgetreuer Darstellung. Es zeigen:
- Fig. 1: eine Prinzipdarstellung einer Spritzgießmaschine mit einem Würfelwerkzeug;
- Fig. 2: eine schematische Darstellung eines auf einer Montagevorrichtung gelagerten Würfelwerkzeugs;
- Fig. 3: eine perspektivische Ansicht einer Spritzgiessmaschine mit prismatischem Werkzeugträger ohne Formwerkzeugteile;
- Fig. 4: eine perspektivische Ansicht eines auf einer vorgeschlagenen Montagevorrichtung gelagerten prismatischen Werkzeugträgers;
- Fig. 5: eine perspektivische Ansicht einer in eine Spritzgiessmaschine eingesetzten Montagevorrichtung; und
- Fig. 6: eine Montagevorrichtung ohne Verschiebeplatte und Montageplatte.

In den Abbildungen sind gleiche Gegenstände jeweils mit den gleichen Bezugszeichen versehen.

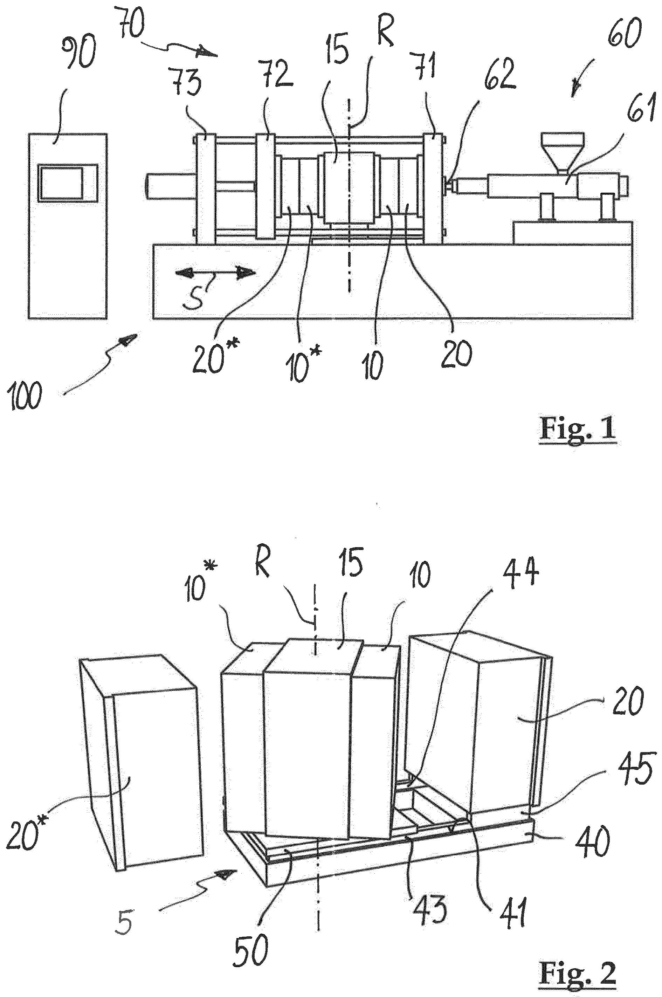

In Fig. 1 ist eine handelsübliche Spritzgießmaschine mit einem Spritzgiesswerkzeug, welches gemäss dem vorliegenden Ausführungsbeispiel als Würfelwerkzeug ausgebildet ist, gesamthaft mit dem Bezugszeichen 100 versehen. Die Spritzgießmaschine 100 besitzt einen sogenannten horizontalen Aufbau mit einem Maschinenrahmen, auf dem ein Spritzaggregat 60 mit einer Plastifiziereinheit 61 samt zugehöriger Spritzeinheit 62 und eine Schließeinheit 70 angeordnet sind. Die Schließeinheit 70 besteht aus einer spritzaggregatseitigen feststehenden Formaufspannplatte 71, einer der feststehenden Formaufspannplatte 71 gegenüberliegenden translatorisch verlagerbaren Formaufspannplatte 72, die auch als Schließplatte bezeichnet wird, und einer Stützplatte 73, an der sich die translatorisch verlagerbare Formaufspannplatte 72 bzw. Schließplatte während ihrer translatorischen Verlagerung entlang einer ersten Richtung S abstützt. Zwischen der Stützplatte 73 und der translatorisch verlagerbaren Formaufspannplatte 72 ist ein hier nicht dargestellter hydraulisch betätigbarer Kniehebel angeordnet. Auch ist auf die Darstellung von wenigstens einer mit der translatorisch verlagerbaren Formaufspannplatte 72 fest verbundenen Plastifiziereinheit verzichtet. Zwischen der feststehenden Formaufspannplatte 71 und der translatorisch verlagerbaren Formaufspannplatte 72 ist ein Spritzgiesswerkzeug angeordnet, welches in Fig. 1 in Schließstellung der beweglichen Formaufspannplatte 72 dargestellt ist. Das beispielsweise dargestellte Spritzgiesswerkzeug, welches als Würfelwerkzeug ausgebildet ist, setzt sich zusammen aus zwei ersten Formwerkzeugteilen 10, 10*, die jeweils an einander gegenüberliegenden Längsseiten eines prismatischen Werkzeugträgers 15 montiert sind, und aus zwei mit den ersten Formwerkzeugteilen 10, 10* korrespondierenden zweiten Formwerkzeugteilen 20 bzw. 20*, die einerseits an der feststehenden Formaufspannplatte 71 und andererseits an der translatorisch verlagerbaren Formaufspannplatte 72 montiert sind. Die ersten und zweiten Formwerkzeugteile 10, 10*, 20, 20* begrenzen jeweils wenigstens eine nicht näher dargestellte Formkavität.

In der Plastifiziereinheit 61 wird ein üblicherweise pulverförmiges oder granuliertes Kunststoffmaterial in einen fliessfähigen Zustand überführt. Das fliessfähige Kunststoffmaterial wird sodann über das Spritzaggregat 60 unter hohem Druck in die nicht näher dargestellte Formkavität eingespritzt, die von dem an der feststehenden Formaufspannplatte 71 montierten zweiten Formwerkzeugteil 20 und dem benachbarten ersten Formwerkzeugteil 10, das an der der feststehenden Formaufspannplatte 71 zugewandten Seite des prismatischen Werkzeugträgers 15 montiert ist, begrenzt ist,. Zum Öffnen der Formkavität werden die ersten 10, 10* und die zweiten Formwerkzeugteile 20, 20* in Längsrichtung der Spritzgiessmaschine 100, die durch den Doppelpfeil S angedeutet ist, auseinandergefahren, Dabei werden sowohl die translatorisch verlagerbare Formaufspannplatte 72 als auch der prismatische Werkzeugträger 15 translatorisch verschoben. Die bewegliche Formaufspannplatte 72 wird dabei soweit translatorisch verschoben, dass auch die Formkavitäten, die von dem an der translatorisch verlagerbaren Formaufspannplatte 72 montierten zweiten Formwerkzeugteil 20* und dem am prismatischen Werkzeugträger montierten ersten Formwerkzeugteil 10* begrenzt sind, geöffnet werden. Im geöffneten bzw. auseinandergefahrenen Zustand der feststehenden Formaufspannplatte 71, des prismatischen Werkzeugträgers 15 und der beweglichen Formaufspannplatte 72 wird der prismatische Werkzeugträger 15 um seine im Wesentlichen senkrecht auf eine durch ein hier nicht dargestelltes Führungssystem zur translatorischen Verlagerung der Schliessplatte 72 aufgespannte Ebene stehende Rotationsachse R gedreht. Nach einer Drehung beispielsweise um 180° gelangt das zunächst der feststehenden Formaufspannplatte 71 zugewandte erste Formwerkzeugteil 10 in Nachbarschaft zu der translatorisch verlagerbaren Formaufspannplatte 72 bzw. zu dem dort montierten zweiten Formwerkzeugteil 20*. Das an der gegenüberliegenden Seite des prismatischen Werkzeugträgers 15 angeordnete erste Formwerkzeugteil 10* liegt dann der feststehenden Formaufspannplatte 71 bzw. dem dort montierten zweiten Formwerkzeugteil 20 gegenüber. Im Betrieb werden die ersten und zweiten Formwerkzeugteile 10, 10*, 20, 20* periodisch geöffnet und wieder geschlossen, um die davon begrenzten Formkavitäten des Spritzgiesswerkzeugs 1 zu schliessen und zu öffnen. Die Richtung der translatorischen Öffnungs- und Schliessbewegung erfolgt entlang der longitudinalen Richtung S, die der Maschinenlängsrichtung entspricht. Die Verschiebebewegung der translatorisch verlagerbaren Formaufspannplatte 72 und des prismatischen Werkzeugträgers 15 sowie dessen Drehbewegung, der Plastifizierer 61 und die Spritzeinheit 62 werden über eine Steuerung 90 kontrolliert. Die beispielsweise dargestellte Spritzgiessmaschine 100 ist für die Herstellung von ein- oder mehrkomponentigen Kunststoffteilen ausgebildet und entspricht im Wesentlichen dem heutigen Standard. Die spritzaggregatseitige feststehende Formaufspannplatte 71 weist für die Spritzeinheit 62 einen Durchbruch auf, um plastifizierten Kunststoff über das zweite Formwerkzeugteil der Kavität zuzuführen.

Fig. 2 zeigt schematisch eine Anordnung von ersten und zweiten Formwerkzeugteilen 10, 10*, 20, 20*, die einem Würfelwerkzeug gemäss Fig. 1 entspricht. Der Werkzeugträger 15 besitzt an zwei einander gegenüberliegenden Seiten erste Formwerkzeugteile 10, 10* und ist drehbar auf einer gesamthaft mit dem Bezugszeichen 5 versehenen Montagevorrichtung gelagert. Die Drehbarkeit des Werkzeugträgers 15 um die Drehachse R ist in Fig. 2 durch die verdrehte Position des Werkzeugträgers 15 angedeutet. Zu beiden Seiten des mit den ersten Formwerkzeugteilen 10, 10* bestückten Werkzeugträgers 15 sind zweite Formwerkzeugteile 20, 20* angeordnet. Das zweite Formwerkzeugteil 20* auf der linken Seite des Werkzeugträgers 15 in Fig. 2 entspricht dabei dem an der translatorisch verlagerbaren Formaufspannplatte (Bezugszeichen 72 in Fig. 1) montierten zweiten Formwerkzeugteil. Die Montagevorrichtung 5 umfasst einen Montagerahmen 40 mit einer Oberseite 41. An der Oberseite 41 des Montagerahmens 40 ist ein Führungssystem angeordnet, dass zwei Führungsschienen 43, 44 umfasst, die parallel zueinander und parallel zu einer Längserstreckung des Montagerahmens 40 verlaufen. Auf den Führungsschienen 43, 44 ist eine Verschiebeplatte 50 gelagert, die translatorisch entlang der Führungsschienen 43, 44 verlagerbar ist. Dadurch kann der mit den ersten Formwerkzeugteilen 10, 10* bestückte prismatische Werkzeugträger 15 zwischen den beiden zweiten Formwerkzeugteilen 20, 20* translatorisch verlagert werden. Innerhalb einer Spritzgiessmaschine entspricht die Richtung der translatorischen Verlagerung der Verschiebeplatte 50 der longitudinalen Verschieberichtung (Bezugszeichen S in Fig. 1).

Ein auf der rechten Seite der Montagevorrichtung 5 angeordnetes zweites Formwerkzeugteil 20 stützt sich auf einer Abstützeinrichtung 45 ab und ist stationär in Bezug auf den translatorisch verlagerbaren Werkzeugträger 15 angeordnet. Die Anordnung des mit den ersten Formwerkzeugteilen 10, 10* bestückten, rotierbar gelagerten Werkzeugträgers 15 und des auf der Abstützeinrichtung 45 montierten zweiten Formwerkzeugteils 20 erlaubt eine sehr einfache Justierung der Formwerkzeugteile 10, 20 in Bezug auf einander. Die Justierung kann ausserhalb der Spritzgiessmaschine erfolgen.

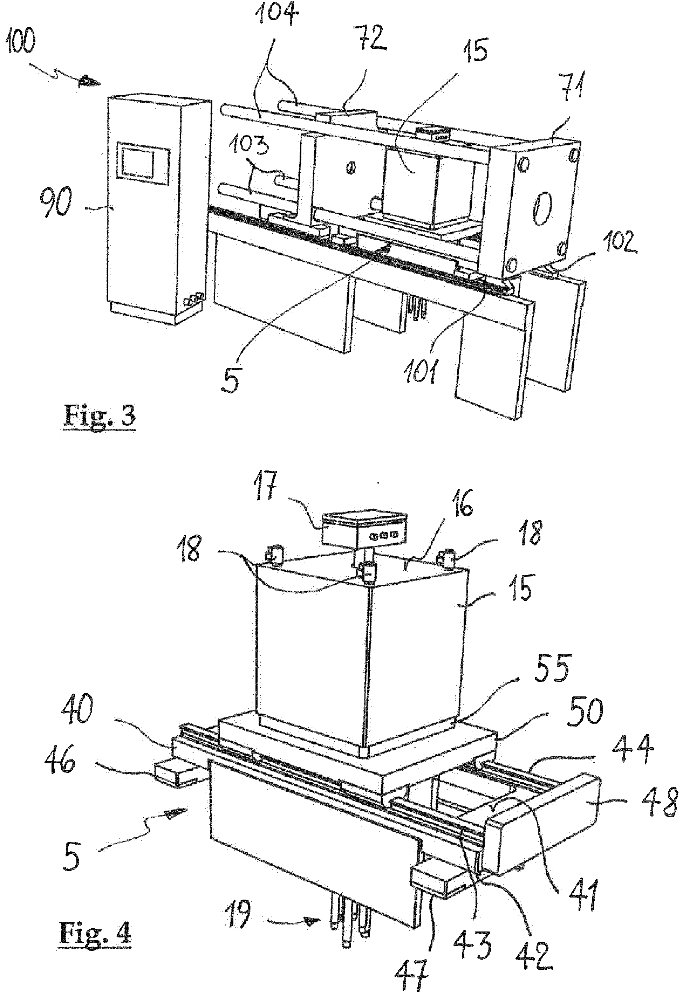

Fig. 3 zeigt eine perspektivische Darstellung des in Fig. 1 angedeuteten prismatischen Werkzeugträgers 15 innerhalb der Spritzgiessmaschine 100. Die Darstellung zeigt nur die feststehende Formaufspannplatte 71, den prismatischen Werkzeugträger 15 und die translatorisch verlagerbare Formaufspannplatte 72. Auf eine Darstellung der Formwerkzeugteile und der festen Stützplatte wurde aus Übersichtsgründen verzichtet. Der prismatische Werkzeugträger 15 ist auf der Montagevorrichtung 5 angeordnet, die sich ihrerseits auf dem Maschinenbett bzw. auf in Längsrichtung der Spritzgiessmaschine 100 verlaufenden parallelen Schienen 101, 102 abstützt. Die parallelen Schienen 101, 102 dienen zum kontrollierten Verschieben der translatorisch verlagerbaren Formaufspannplatte 72. Zusätzlich sind bei den bekannten Spritzgiessmaschinen jeweils zwei obere und untere Führungsholme 103, 104 vorgesehen, die zur Führung der beweglichen Formaufspannplatte 72 dienen können. Bei den bekannten Spritzgiessmaschinen des Stands der Technik mit Würfelwerkzeug dienen die oberen Führungsholme 104 üblicherweise auch zum Abstützen des Würfelwerkzeugs, das einige Tonnen wiegen kann. Zum Unterschied von den Spritzgiessmaschinen des Stands der Technik weisen bei der vorgeschlagenen Spritzgiessmaschine 100 die unteren und die oberen Holme 103, 104 keine Stützfunktion für den prismatischen Werkzeugträger 15 auf. Dieser ist auf der Montagevorrichtung montiert und frei von jeglicher weiterer Abstützung. Dadurch kann die Montagevorrichtung 5 mit dem prismatischen Werkzeugträger 15 einfach in die Spritzgiessmaschine 100 eingesetzt und bei Bedarf auch wieder aus dieser entfernt werden. Die Montagevorrichtung 5 stützt sich nur am Maschinenbett oder an den Schienen 101, 102 der Spritzgiessmaschine ab und ist nicht mit dem Maschinenbett verschraubt oder verbunden. Dadurch ist ein Verspannen der Montagevorrichtung 5 vermieden.

Fig. 4 zeigt einen auf der Montagevorrichtung 5 angeordneten prismatischen Werkzeugträger 15. Die Montagevorrichtung 5 umfasst einen Montagerahmen 40 mit einer Oberseite 41. An der Oberseite 41 des Montagerahmens 40 ist ein Führungssystem angeordnet, das zwei Führungsschienen 43, 44 umfasst, die parallel zueinander und zu einer Längserstreckung des Montagerahmens 40 verlaufen. Auf den Führungsschienen 43, 44 ist eine Verschiebeplatte 50 gelagert, die translatorisch entlang der Führungsschienen 43, 44 verlagerbar ist. Auf der Verschiebeplatte 50 ist eine Montageplatte 55 drehbar gelagert. Der prismatische Werkzeugträger 15 ist auf der Montageplatte 55 angeordnet und kann mit dieser verschraubt sein. An einer Unterseite 42 des Montagerahmens 40 können Abstützelemente 46, 47 angeordnet sein. Die Abstützelemente 46, 47 dienen zur Abstützung des Montagerahmens 40 gegenüber dem Maschinenbett der Spritzgiessmaschine. Die Abstützelemente 46, 47 können dabei an den Längsseiten der Unterseite 42 des Montagerahmens 40 angeordnet sein und dienen dazu, Unebenheiten des Maschinenbetts der Spritzgiessmaschine bzw. von dort angeordneten Führungsorganen, wie z.B. Führungsschienen oder ähnlichem, auszugleichen. Grössere Ungleichmässigkeiten werden dabei einfach durch eine entsprechende Anordnung verschieden hoher Abstützelemente 46, 47 ausgeglichen. An einem Stirnende des Montagerahmens 40 ist eine Verbindungsplatte 48 angeordnet, die zur Befestigung der Montagevorrichtung 5 an der feststehenden Formaufspannplatte (Bezugszeichen 71 in Fig. 1) dient. Nach der Befestigung der Montagevorrichtung 5 an der feststehenden Formaufspannplatte ist die Montagevorrichtung auf die Maschinenachse der Spritzgiessmaschine ausgerichtet.

Fig. 4 zeigt weiter, dass an einer Oberseite 16 des prismatischen Werkzeugträgers 15 ein Ventilblock 17 für elektrische und pneumatische Versorgung sowie für die erforderliche Elektronik montiert ist. Die an den Ecken der Oberseite 16 angedeuteten Zylinder 18 sind beispielsweise Hydraulikventile. Die eine Unterseite 42 des Montagerahmens 40 überragenden Leitungen 19 symbolisieren Zu- und Ableitungen für Hydraulikflüssigkeit und für Kühlflüssigkeit, üblicherweise Wasser, Leitungen für die Zufuhr von Druckluft sowie Leitungen für die elektrische Versorgung und für die erforderliche Elektronik. Indem diese Versorgungsleitungen 19 alle am prismatischen Werkzeugträger 15 angeordnet sind, ist dieser weitgehend unabhängig vom Versorgungssystem der Spritzgiessmaschine. Dies erlaubt eine einfachere und genormte Ausbildung des Würfelwerkzeugs.

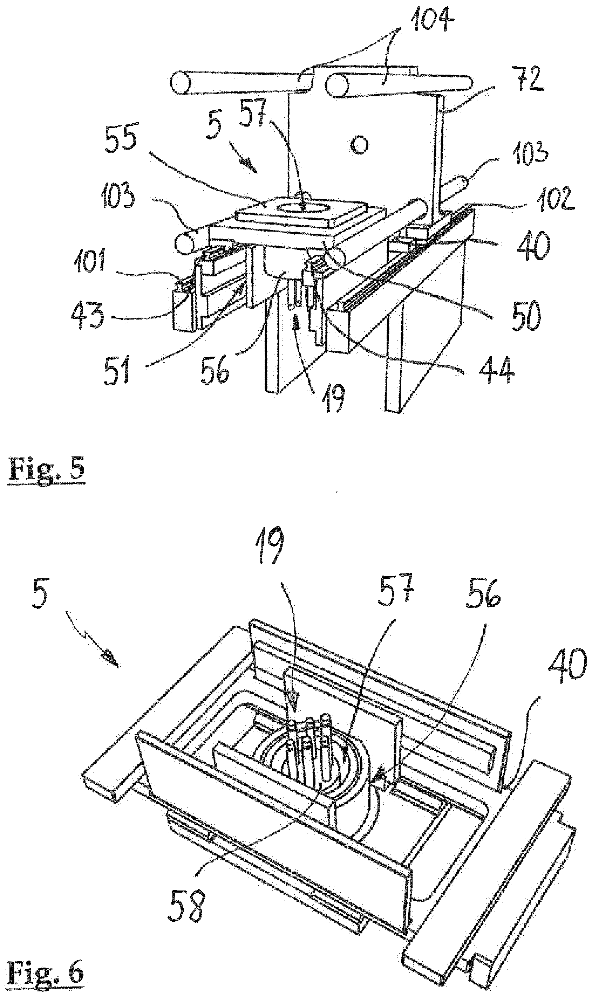

Fig. 5 zeigt eine perspektivische Darstellung eines Abschnitts einer in einer Spritzgiessmaschine angeordneten Montagevorrichtung 5. Aus Gründen der besseren Übersicht wurde auf eine Darstellung des auf der Montagevorrichtung 5 angeordneten prismatischen Werkzeugträgers verzichtet. Der Montagerahmen 40 der Montagevorrichtung 5 ruht auf den beiden parallelen Schienen 101, 102 auf dem Maschinenbett der Spritzgiessmaschine. Die parallelen Schienen 101, 102 dienen zum kontrollierten Verschieben der translatorisch verlagerbaren Formaufspannplatte 72. Die aus dem Stand der Technik bekannten Spritzgiessmaschinen weisen jeweils zwei obere und untere Führungsholme 103, 104 auf, die zur Führung der beweglichen Formaufspannplatte 72 dienen können. Bei den bekannten Spritzgiessmaschinen des Stands der Technik mit Würfelwerkzeug dienen die oberen Führungsholme 104 üblicherweise auch zum Abstützen des Würfelwerkzeugs, das einige Tonnen wiegen kann. Zum Unterschied von den Spritzgiessmaschinen des Stands der Technik weisen bei der erfindungsgemässen Spritzgiessmaschine 100 die unteren und die oberen Holme 103, 104 keine Stützfunktion für den prismatischen Werkzeugträger auf. Die Führungsschienen 43, 44 an der Oberseite des Montagerahmens 40 verlaufen in Längsrichtung des Montagerahmens 40 und erlauben eine translatorische Verlagerung der darauf montierten Verschiebeplatte 50. Auf der Verschiebeplatte 50 ist die Montageplatte 55 drehbar gelagert. Der Werkzeugträger (Bezugszeichen 15 in Fig. 2) wird auf der Montageplatte 55 montiert.

Für eine kontrollierte Drehung der Montageplatte 55 ist ein elektrischer Antrieb 56, insbesondere ein sogenannter Torquemotor, vorgesehen, der die Verschiebeplatte 50 durchsetzt. Der Torquemotor weist vorzugsweise eine Innenläufer-Bauweise auf. Dabei ist der innenliegende Rotor des hochpoligen Elektromotors 56 drehfest mit der Montageplatte 55 verbunden. Die Innenläufer-Bauweise des Torquemotors erlaubt eine jeweils hohlzylinderförmige Ausbildung des Stators und des Rotors. Dadurch bleibt eine zentrale Durchführung frei, die mit dem Bezugszeichen 57 angedeutet ist. Die zentrale Durchführung 57 lässt Raum für die Versorgungsleitungen 19 zu dem auf der Montageplatte 55 angeordneten prismatischen Werkzeugträger (Bezugszeichen 15 in Fig. 4). Zur Überwachung der Drehbewegung des Elektromotors 56 kann ein erster absoluter Messwertgeber, vorzugsweise ein Drehwinkelsensor, vorgesehen sein. Für die translatorische Verlagerung der Verschiebeplatte 50 kann beispielsweise ein Linearmotor 51 vorgesehen sein. Dabei kann das Primärteil des Linearmotors beispielsweise mit der Verschiebeplatte 50 verbunden sein, während das Sekundärteil an dem Montagerahmen 40 angeordnet ist. Auch hier kann zur Erfassung der Position ein zweiter absoluter Messwertgeber wie beispielsweise ein Hallsensor oder ein Glasmassstab vorgesehen sein.

Fig. 6 zeigt die Montagevorrichtung 5 ohne Verschiebeplatte und ohne Montageplatte. Auch auf eine Darstellung der Führungsschienen an der Oberseite des Montagerahmens 40 wurde verzichtet. Deutlich erkennbar ist der als ein Torquemotor in Innenläufer-Bauweise ausgebildete elektrische Drehantrieb 56 für die nicht dargestellte drehbar gelagerte Montageplatte. Aus der Darstellung ist ersichtlich, dass der Stator und der Rotor des elektrischen Antriebs 56 jeweils zylinderförmig ausgebildet und konzentrisch zueinander angeordnet sind. Die im Rotor ausgebildete zentrale Durchführung 57 wird von einer zentral angeordneten Drehdurchführung 58 für Versorgungsleitungen 19 für Medien und elektrische Energie sowie für Steuerleitungen eingenommen. Dabei sind wenigstens ein Paar erste Versorgungsleitungen für die Zufuhr und die Abfuhr von Kühlwasser, wenigstens ein Paar zweite Versorgungsleitungen für die Zufuhr und die Abfuhr von Hydrauliköl, wenigstens eine Versorgungsleitung für Druckluft, wenigstens eine Versorgungsleitung für elektrische Energie und wenigstens eine Steuerleitung vorgesehen.

Ein Spritzgiesswerkzeug, das auf einer vorgeschlagenen Montagevorrichtung montiert ist, ermöglicht eine Vorjustierung von ersten und zweiten Formwerkzeugteilen ausserhalb einer Spritzgiessmaschine. Die Montagevorrichtung weist ihr eigenes translatorisches Verschiebesystem und einen eigenständigen Drehantrieb auf, so dass das Spritzgiesswerkzeug weitgehend unabhängig von den Antrieben der Spritzgiessmaschine bedienbar ist. Das Antriebssystem der Spritzgiessmaschine wird nur für die Zustellung der Schliessplatte bzw. der translatorisch verlagerbaren Formaufspannplatte auf das Spritzgiesswerkzeug benötigt. Durch die Montage der wesentlichen Bestandteile des Spritzgiesswerkzeugs auf einer erfindungsgemässen Montagevorrichtung kann der Aufwand für die Justierung des Spritzgiesswerkzeugs selbst und in Bezug auf die Spritzgiessmaschinenkomponenten verringert werden. Dadurch können Rüst- und Umrüstzeiten der Spritzgiessmaschine verkürzt werden. Die auf der vorgeschlagenen Montagevorrichtung angeordneten Bestandteile des Spritzgiesswerkzeugs weisen eine sehr grosse Eigensteifigkeit auf. Auf eine obenliegende Gegenabstützung, wie z.B. zusätzliche Holme (Fig. 2) oder Lagerungen zur Vorbeugung gegen ein Verkippen kann unabhängig vom Werkzeuggewicht verzichtet werden.

Die Erfindung wurde anhand einer beispielsweisen Ausführungsvariante einer Spritzgiessmaschine und eines Ausführungsbeispiels eines Spritzgiesswerkzeugs beschrieben. Es versteht sich, dass die dargestellten Ausführungsvariante auch Modifikationen aufweisen kann, die sich für den Fachmann in Kenntnis der Erfindung erschliessen. Die beispielsweise dargestellte Ausführungsvariante der Erfindung ist daher nicht als einschränkend anzusehen. Der Schutzumfang der beanspruchten Erfindung ist vielmehr durch die in den Ansprüchen angeführten Merkmale festgelegt.

## Patentansprüche

1. Montagevorrichtung (5) für Formwerkzeugteile eines Spritzgiesswerkzeugs mit einer in eine Spritzgiessmaschine (100) einsetzbaren Montageplatte (55), auf welcher ein Werkzeugträger (15) zur Aufnahme von ersten Formwerkzeugteilen (10, 10*) montierbar ist, **dadurch gekennzeichnet, dass** die Montageplatte (55) auf einem Montagerahmen (40) angeordnet ist, der ein Führungssystem für eine translatorische Verlagerung der Montageplatte (55) entlang einer Längserstreckung des Montagerahmens (40) aufweist und der eine Abstützeinrichtung (45) für ein stationär anordenbares mit wenigstens einem der ersten Formwerkzeugteile (10, 10*) korrespondierendes zweites Formwerkzeugteil (20) aufweist, zur Vorjustierung des ersten und zweiten Formwerkzeugteils (10, 10*; 20).

2. Montagevorrichtung (5) gemäß Anspruch 1, **dadurch gekennzeichnet, dass** der Montagerahmen (40) eine Unterseite (42) aufweist, die von der Montageplatte (55) abgewandt ist, und dass an den Längsseiten des Montagerahmens (40) Abstützelemente (46, 47) an seiner Unterseite (42) montiert sind, die als Abstützung gegenüber einem Maschinenbett einer Spritzgiessmaschine (100) dienen.

3. Montagevorrichtung (5) nach Anspruch 1 oder 2, **dadurch gekennzeichnet, dass** der Montagerahmen (40) an seinem einen Längsende eine Stirnseite aufweist, welche für eine lösbare Verbindung mit einer festen Formaufspannplatte (719 einer Spritzgiessmaschine (100) ausgebildet ist.

4. Montagevorrichtung (5) nach einem der vorangehenden Ansprüche, **dadurch gekennzeichnet, dass** das Führungssystem des Montagerahmens zwei parallel zur Längserstreckung des Montagerahmens (40) verlaufende Führungsschienen (43, 44), die an einer Oberseite (41) des Montagerahmens (40) angeordnet sind, und eine Verstellvorrichtung für die Montageplatte (55) aufweist.

5. Montagevorrichtung (5) nach Anspruch 4, **dadurch gekennzeichnet, dass** die Montageplatte (55) auf einer Verschiebeplatte (50) gelagert ist, die sich an den Führungsschienen (43, 44) abstützt und gemeinsam mit der Montageplatte (55) translatorisch verlagerbar ist.

6. Montagevorrichtung (5) nach Anspruch 5, **dadurch gekennzeichnet, dass** die Montageplatte (55) auf einer die Verschiebeplatte (50) durchsetzenden Dreheinheit montiert und um eine senkrecht zu einer Oberseite der Verschiebeplatte (50) verlaufenden Drehachse (R) rotierbar ist.

7. Montagevorrichtung (5) nach Anspruch 6, **dadurch gekennzeichnet, dass** die Dreheinheit ein einen Stator und einen Rotor aufweisenden hochpoliger Elektromotor, vorzugsweise ein Torquemotor in Innenläufer-Bauweise, ist, wobei der Rotor drehfest mit der Montageplatte (55) verbunden ist.

8. Montagevorrichtung (5) nach Anspruch 7, **dadurch gekennzeichnet, dass** ein erster absoluter Messwertgeber, vorzugsweise ein Drehwinkelsensor, zur Überwachung der Drehbewegung des Elektromotors vorgesehen ist.

9. Montagevorrichtung (5) nach einem der Ansprüche 4 bis 8, **dadurch gekennzeichnet, dass** die Abstützeinrichtung (45) für das zweite Formwerkzeugteil als ein Trägerschlitten ausgebildet ist, die sich auf den Führungsschienen (43, 44) abstützt und translatorisch zwischen der Montageplatte (55) und einer am Montagerahmen (40) angeordneten Verbindungsvorrichtung zu einer feststehenden Formaufspannplatte (72) einer Spritzgiessmaschine (100) verlagerbar ist.

10. Montagevorrichtung (5) nach einem der Ansprüche 5 bis 9, **dadurch gekennzeichnet, dass** die Verstellvorrichtung für die translatorisch verlagerbare Verschiebeplatte ein Linearmotor (51) ist.

11. Montagevorrichtung (5) nach Anspruch 10, **dadurch gekennzeichnet, dass** ein zweiter absoluter Messwertgeber für die Überwachung der translatorischen Verlagerung der Verschiebeplatte (55) vorgesehen ist.

12. Montagevorrichtung (5) nach einem der Ansprüche 7 bis 11, **dadurch gekennzeichnet, dass** der Torquemotor in Innenläufer-Bauweise ausgebildet ist und einen hohlzylinderförmig ausgebildeten Rotor mit einer vorzugsweise zentral angeordneten Durchführung (57) für Versorgungsleitungen für Medien und elektrische Energie sowie für Steuerleitungen aufweist.

13. Montagevorrichtung nach Anspruch 12, **dadurch gekennzeichnet, dass** wenigstens ein Paar erste Versorgungsleitungen (19) für die Zufuhr und die Abfuhr von Kühlwasser, wenigstens ein Paar zweite Versorgungsleitungen für die Zufuhr und die Abfuhr von Hydrauliköl, wenigstens eine Versorgungsleitung (19) für Druckluft, wenigstens eine Versorgungsleitung (19) für elektrische Energie und wenigstens eine Steuerleitung vorgesehen sind.

14. Montagevorrichtung (5) nach Anspruch 12 oder 13, **dadurch gekennzeichnet, dass** die Durchführung (57) eine Drehdurchführung ist.

15. Spritzgiesswerkzeug (5) umfassend eine Montagevorrichtung (5) gemäss einem der Ansprüche 1 bis 14, mit einem ersten Formwerkzeugteil (10, 10*) und wenigstens einem zweiten Formwerkzeugteil (20), die im geschlossenen Zustand wenigstens eine Formkavität begrenzen, wobei das zweite Formwerkzeugteil (20) an einer feststehenden Formaufspannplatte (71) einer Spritzgiessmaschine befestigbar ist, **gekennzeichnet dadurch, dass** das erste Formwerkzeugteil (10, 10*) an einem auf einer Montageplatte (55) montierten Werkzeugträger (15) und das zweite Formwerkzeugteil an einer Abstützeinrichtung (40) der Montatevorrichtung (5) montiert sind.

16. Spritzgiesswerkzeug nach Anspruch 15, **dadurch gekennzeichnet, dass** der Werkzeugträger (15) prismatisch ausgebildet ist und um eine senkrecht zu einer Verschiebeebene verlaufende Drehachse (R) vorbestimmt drehbar ist.

17. Spritzgiesswerkzeug nach Anspruch 16, **dadurch gekennzeichnet, dass** der Werkzeugträger (15) wenigstens 4 Seitenflächen aufweist, die parallel zu seiner Drehachse (R) verlaufen und wenigstens an zwei einander gegenüberliegenden Seitenflächen erste Formwerkzeugteile (10, 10*) montiert sind.

18. Spritzgiesswerkzeug nach Anspruch 17, **dadurch gekennzeichnet, dass** der Werkzeugträger (15) im Wesentlichen gleichzeitig translatorisch und rotatorisch verlagerbar ist.

19. Spritzgiesswerkzeug nach einem der Ansprüche 16 bis 18, **dadurch gekennzeichnet, dass** innerhalb und/oder an einer der Montageplatte (50) gegenüberliegenden Oberseite (16) des prismatisch ausgebildeten Werkzeugträgers (15) wenigstens ein Ventilblock (17) für die Zuleitung, Ableitung und Verteilung eines hydraulischen Mediums, einer Kühlflüssigkeit und von Druckluft angeordnet ist.

20. Spritzgiessmaschine (100) mit einer Montagevorrichtung (5) für ein Spritzgiesswerkzeug gemäss einem der Ansprüche 1 bis 14, wobei die Spritzgiessmaschine (100) eine translatorisch verlagerbare Formaufspannplatte (72) aufweist, **dadurch gekennzeichnet, dass** die Montageplatte (50) für eine translatorische Verlagerung ausgebildet ist, die im Wesentlichen parallel zu der translatorischen Verlagerung der Formaufspannplatte (72) verläuft.

21. Spritzgiessmaschine nach Anspruch 20, **dadurch gekennzeichnet, dass** die translatorisch verlagerbare Formaufspannplatte (72) von einer Geschlossen-Stellung in eine Offen-Stellung, und umgekehrt, um eine vorbestimmte erste Distanz verlagerbar ist, dass die Montageplatte (50) von einer Geschlossen-Stellung in eine Offen-Stellung, und umgekehrt, um eine zweite Distanz verlagerbar ist, wobei die erste Distanz im Wesentlichen doppelt so groß ist wie die zweite Distanz.

22. Spritzgiessmaschine nach Anspruch 20 oder 21, **dadurch gekennzeichnet, dass** die Montageplatte (50) für eine rotatorische Bewegung ausgebildet ist, wobei die translatorische Verlagerung und die rotatorische Bewegung der Montageplatte (55) im Wesentlichen gleichzeitig erfolgen können.

23. Spritzgiessmaschine mit einem Spritzgiesswerkzeug gemäss einem der Ansprüche 15 bis 19, wobei die Spritzgiessmaschine eine entlang von Führungsschienen (43, 44) translatorisch verlagerbare und eine feststehende Formaufspannplatte (71) aufweist, **dadurch gekennzeichnet, dass** das Spritzgiesswerkzeug auf den Führungsschienen (43, 44) aufliegt und mit der feststehenden Formaufspannplatte (71) lösbar verbunden ist.

## Claims

1. An assembly appliance (5) for mould tool parts of an injection moulding tool, with an assembly plate (55) which can be inserted into an injection moulding machine (100) and on which a tool carrier (15) for receiving first mould tool parts (10, 10*) can be assembled, **characterised in that** the assembly plate (55) is arranged on an assembly frame (40) which comprises a guide system for a translatory displacement of the assembly plate (55) along a longitudinal extension of the assembly frame (40) and which comprises a support device (45) for a second mould tool part which can be arranged in a stationary manner and corresponds to at least one of the first mould tool parts (10, 10*) for the pre-adjustment of the first mould tool and the second mould tool part (10, 10*, 20).

2. An assembly appliance (5) according to claim 1, **characterised in that** the assembly frame (40) comprises a lower side which is away from the assembly plate (55), and that support elements (46, 47) which serve for the support with respect to the machine bed of the injection moulding machine are assembled on the longitudinal sides of the assembly frame (40) on its lower side (42).

3. An assembly appliance (5) according to claim 1 or 2, **characterised in that** the assembly frame (40) on its one longitudinal end comprising a face side which is designed for a releasable connection to a fixed mould clamping plate (71) of an injection moulding machine (100).

4. An assembly appliance (5) according to one of the preceding claims, **characterised in that** the guide system of the assembly frame (40) comprises two guide rails (43, 44) which run parallel to the longitudinal extension of the assembly frame (40) and which are arranged on an upper side of the assembly frame (40), and an adjustment appliance for the assembly plate (55).

5. An assembly appliance (5) according to claim 4, **characterised in that** the assembly plate (55) is mounted on a displacement plate (50) which is supported on the guide rails (43, 44) and is translatorily displaceable together with the assembly plate (55).

6. A assembly appliance (5) according to claim 5, **characterised in that** the assembly plate (55) is assembled on a rotation unit which passes through the displacement plate (50) and is rotatable about a rotation axis (R) which runs perpendicularly to the upper side of the displacement plate (50).

7. An assembly appliance (5) according to claim 6, **characterised in that** the rotation unit is a multi-pole electric motor which comprises a stator and a rotor, preferably a torque motor with an internal rotor construction manner, wherein the rotor is connected to the assembly plate (55) in a rotationally fixed manner.

8. An assembly appliance (5) according to claim 7, **characterised in that** a first absolute sensor, preferably a rotation angle sensor is provided for monitoring the rotation movement of the electric motor.

9. An assembly appliance (5) according to one of the claims 4 to 8, **characterised in that** the support device (45) for the second mould tool part is designed as a carrier slide which is supported on the guide rails (43, 44) and between the assembly plate (55) and a connection device which is arranged on the assembly frame (40) is translatorily displaceable with respect to a stationary mould clamping plate (72) of an injection moulding machine (100).

10. An assembly appliance (5) according to one of the claims 5 to 9, **characterised in that** the adjustment appliance for the translatorily displaceable displacement plate (50) is a linear motor (51).

11. An assembly appliance (5) according to claim 10, **characterised in that** a second absolute sensor is provided for the monitoring of the translatory displacement of the displacement plate (50).

12. An assembly appliance (5) according to one of the claims 7 to 11, **characterised in that** the torque motor is designed in an internal rotor construction manner and comprises a rotor which is designed in the shape of a hollow cylinder and which is with a preferably centrally arranged feed-through (57) for the supply conduits / leads for media and electrical energy, as well as for control leads.

13. An assembly appliance (5) according to claim 12, **characterised in that** at least one pair of first supply conduits (19) for the feed and discharge of cooling water, at least one pair of second supply conduits for the feed and discharge of hydraulic oil, at least one supply conduit (19) for compressed air, at least one supply lead (19) for electrical energy and at least one control lead are provided.

14. An assembly appliance (5) according to claim 12 or 13, **characterised in that** the feed-through (57) is a rotation feed-through.

15. An injection moulding tool (5) comprising an assembly appliance (5) according to any one of claims 1 to 14, with a first mould tool part (10, 10*) and at least one second mould tool part (20) which in the closed state delimit at least one mould cavity, wherein the second mould tool part (20) can be assembled on a stationary mould clamping plate (71) of an injection moulding machine, **characterised in that** the first mould tool part (10, 10*) is assembled on a tool carrier (15) which is assembled on an assembly plate (55) and the second mould tool part (20) is assembled on a support device (40) of an assembly appliance (5) according to one of the claims 1 to 14.

16. An injection moulding tool according to claim 15, **characterised in that** the tool carrier () is designed in a prismatic manner and is rotatable in a predefined manner about a rotation axis () which runs perpendicularly to a displacement plane.

17. An injection moulding tool according to claim 16, **characterised in that** the tool carrier (15) comprises at least 4 side surfaces which run parallel to its rotation axis (R) and first mould tool parts (10, 10*) are assembled at least on two side surfaces which lie opposite one another.

18. An injection moulding tool according to claim 17, **characterised in that** the tool carrier (15) is translatorily and rotationally displaceable essentially simultaneously.

19. An injection moulding tool according to one of the claims 16 to 18, **characterised in that** at least one valve block for the feed, discharge and distribution of a hydraulic medium, a cooling fluid and compressed air is arranged within and/or on an upper side of the prismatically designed tool carrier (15) which lies opposite the assembly plate (50).

20. An injection moulding tool (100) with an assembly appliance (5) for an injection moulding tool according to one of the claims 1 to 14, wherein the injection moulding machine (100) comprises a translatorily displaceable mould clamping plate (72), **characterised in that** assembly plate (50) is designed for a translatory displacement which is essentially parallel to the translatory displacement of the mould clamping plate (72).

21. An injection moulding machine according to claim 20, **characterised in that** the translatorily displaceable mould clamping plate (72) can be displaced from a closed position into an open position, and vice versa, by a predefined first distance, that the assembly plate (50) can be displaced from a closed position into an open position, and vice versa, by a second distance, wherein the first distance is essentially twice as large as the second distance.

22. An injection moulding machine according to 20 or 21, **characterised in that** the assembly plate (55) is designed for a rotatory movement, wherein the translatory displacement and the rotatory movement of the assembly plate (55) can be effected essentially simultaneously.

23. An injection moulding machine with an injection moulding tool according to one of the claims 15 to 19, wherein the injection moulding machine comprises a mould clamping plate (71) which is translatorily displaceable along guide rails (43, 44), and a stationary mould clamping plate (71), **characterised in that** the injection moulding tool lies on the guide rails (43, 44) and is releasably connected to the stationary mould clamping plate (71).

## Revendications

1. Dispositif de montage (5) pour parties d'outil de moulage d'un outil de moulage par injection, comprenant une plaque de montage (55) qui peut être mise en place dans une machine de moulage par injection (100) et sur laquelle peut être monté un porte-outil (15) en vue d'accueillir des premières parties d'outil de moulage (10, 10*), **caractérisé en ce que** la plaque de montage (55) est disposée sur un cadre de montage (40) qui comporte un système de guidage pour un déplacement translatoire de la plaque de montage (55), le long d'une dimension longitudinale du cadre de montage (40), et qui comporte un dispositif d'appui (45) pour une deuxième partie d'outil de moulage (20) pouvant être installée de manière stationnaire, correspondant à au moins une des premières parties d'outil de moulage (10, 10*), en vue du préréglage de la première et de la deuxième partie d'outil de moulage (10, 10*, 20).

2. Dispositif de montage (5) selon la revendication 1, **caractérisé en ce que** le cadre de montage (40) présente une face inférieure (42) qui est détournée de la plaque de montage (55), et **en ce que**, sur les grands côtés du cadre de montage (40), des éléments d'appui (46, 47) sont montés sur sa face inférieure (42), qui servent d'appui vis-à-vis d'un banc de machine d'une machine de moulage par injection (100).

3. Dispositif de montage (5) selon la revendication 1 ou 2, **caractérisé en ce que** le cadre de montage (40) présente, à une de ses extrémités longitudinales, une face frontale qui est conformée en vue d'une liaison amovible avec une plaque de serrage de moule (719 d'une machine de moulage par injection (100).

4. Dispositif de montage (5) selon une des revendications précédentes, **caractérisé en ce que** le système de guidage du cadre de montage présente deux glissières (43, 44), qui s'étendent parallèlement à la dimension longitudinale du cadre de montage (40) et sont disposées sur une face supérieure (41) du cadre de montage (40), et un dispositif de déplacement pour la plaque de montage (55).

5. Dispositif de montage (5) selon la revendication 4, **caractérisé en ce que** la plaque de montage (55) est installée sur une plaque coulissante (50) qui est en appui sur les glissières (43, 44) et peut être déplacée en translation, conjointement avec la plaque de montage (55).

6. Dispositif de montage (5) selon la revendication 5, **caractérisé en ce que** la plaque de montage (55) est montée sur une unité de rotation traversant la plaque coulissante (50) et peut être mise en rotation autour d'un axe de rotation (R) s'étendant perpendiculairement à une face supérieure de la plaque coulissante (50).

7. Dispositif de montage (5) selon la revendication 6, **caractérisé en ce que** l'unité de rotation est un moteur électrique à polarité élevée présentant un stator et un rotor, de préférence un moteur couple de conception à rotor interne, le rotor étant relié de manière solidaire en rotation à la plaque de montage (55).

8. Dispositif de montage (5) selon la revendication 7, **caractérisé en ce qu'**il est prévu un premier capteur de mesure absolue, de préférence un capteur d'angle de rotation, destiné à surveiller le mouvement de rotation du moteur électrique.

9. Dispositif de montage (5) selon une des revendications 4 à 8, **caractérisé en ce que** le dispositif d'appui (45) pour la deuxième partie d'outil de moulage est réalisé sous la forme d'un chariot support qui est en appui sur les glissières (43, 44) et peut être déplacé en translation entre la plaque de montage (55) et un dispositif de liaison installé sur le cadre de montage (40), jusqu'à une plaque de serrage de moule (72) stationnaire d'une machine de moulage par injection (100).

10. Dispositif de montage (5) selon une des revendications 5 à 9, **caractérisé en ce que** le dispositif de déplacement pour la plaque coulissante à déplacement translatoire est un moteur linéaire (51).

11. Dispositif de montage (5) selon la revendication 10, **caractérisé en ce qu'**il est prévu un deuxième capteur de mesure absolue pour la surveillance du déplacement translatoire de la plaque coulissante (50).

12. Dispositif de montage (5) selon une des revendications 7 à 11, **caractérisé en ce que** le moteur couple est réalisé en conception à rotor interne et présente un rotor conformé en cylindre creux, doté d'un passage (57), disposé de préférence de manière centrale, pour des conduites ou lignes d'alimentation en fluides et énergie électrique, ainsi que pour des lignes de commande.

13. Dispositif de montage selon la revendication 12, **caractérisé en ce qu'**il est prévu au moins une paire de premières conduites d'alimentation (19) pour l'amenée et l'évacuation d'eau de refroidissement, au moins une paire de deuxièmes conduites d'alimentation pour l'amenée et l'évacuation d'huile hydraulique, au moins une conduite d'alimentation (19) en air comprimé, au moins une ligne d'alimentation (19) en énergie électrique et au moins une ligne de commande.

14. Dispositif de montage (5) selon la revendication 12 ou 13, **caractérisé en ce que** le passage (57) est un passage rotatif.

15. Outil de moulage par injection (5) comportant un dispositif de montage (5) selon une des revendications 1 à 14, comprenant une première partie d'outil de moulage (10, 10*) et au moins une deuxième partie d'outil de moulage (20), qui, à l'état fermé, délimitent au moins une cavité de moule, la deuxième partie d'outil de moulage (20) pouvant être fixée à une plaque de serrage de moule (71) stationnaire d'une machine de moulage par injection, **caractérisé en ce que** la première partie d'outil de moulage (10, 10*) est montée sur un porte-outil (15) installé sur une plaque de montage (55), et la deuxième partie d'outil de moulage est montée sur un dispositif d'appui (40) du dispositif de montage (5).

16. Outil de moulage par injection selon la revendication 15, **caractérisé en ce que** le porte-outil (15) est réalisé sous une forme prismatique et peut être mis en rotation de manière prédéfinie autour d'un axe de rotation (R) s'étendant perpendiculairement à un plan de déplacement.

17. Outil de moulage par injection selon la revendication 16, **caractérisé en ce que** le porte-outil (15) présente au moins 4 faces latérales qui s'étendent parallèlement à son axe de rotation (R), et que des premières parties d'outil de moulage (10, 10*) sont montées sur au moins deux faces latérales situées en vis-à-vis l'une de l'autre.

18. Outil de moulage par injection selon la revendication 17, **caractérisé en ce que** le porte-outil (15) peut être déplacé sensiblement simultanément en translation et en rotation.

19. Outil de moulage par injection selon une des revendications 16 à 18, **caractérisé en ce que**, à l'intérieur et/ou sur une face supérieure (16) du porte-outil (15) réalisé sous une forme prismatique, située en vis-à-vis de la plaque de montage (55), il est prévu au moins un bloc de vannes (17) pour l'amenée, l'évacuation et la distribution d'un fluide hydraulique, d'un liquide de refroidissement et d'air comprimé.

20. Machine de moulage par injection (100) dotée d'un dispositif de montage (5) pour un outil de moulage par injection selon une des revendications 1 à 14, la machine de moulage par injection (100) présentant une plaque de serrage de moule (72) déplaçable en translation, **caractérisée en ce que** la plaque de montage (50) est réalisée en vue d'un déplacement translatoire qui se déroule de manière sensiblement parallèle au déplacement translatoire de la plaque de serrage de moule (72).

21. Machine de moulage par injection selon la revendication 20, **caractérisée en ce que** la plaque de serrage de moule (72) déplaçable en translation peut être déplacée d'une première distance prédéfinie, d'une position de fermeture dans une position d'ouverture et inversement, **en ce que** la plaque de montage (50) peut être déplacée d'une deuxième distance, d'une position de fermeture dans une position d'ouverture et inversement, la première distance valant sensiblement le double de la deuxième distance.

22. Machine de moulage par injection selon la revendication 20 ou 21, **caractérisée en ce que** la plaque de montage (50) est réalisée en vue d'un mouvement rotatoire, le déplacement translatoire et le mouvement rotatoire de la plaque de montage (55) pouvant s'effectuer de manière sensiblement simultanée.

23. Machine de moulage par injection dotée d'un outil de moulage par injection selon une des revendications 15 à 19, la machine de moulage par injection présentant une plaque de serrage de moule pouvant être déplacée en translation le long de glissières (43, 44) et une plaque de serrage de moule (71) stationnaire, **caractérisée en ce que** l'outil de moulage par injection repose sur les glissières (43, 44) et est relié de façon amovible à la plaque de serrage de moule (71) stationnaire.
